# EUROPÄISCHE PATENTANMELDUNG

(11) **EP 2 280 553 A2**
(43) Date of publication of application: **02.02.2011**
(21) Application number: 10251278.7
(22) Date of filing: 16.07.2010
(51) Int. Cl.: H04N 13/00

(54) **Steroscopic Image Display Display Apparatus, Method, Recording Medium And Image Pickup Apparatus**

(30) Priority: 21.07.2009 JP 2009170252
(71) Applicant: FUJIFILM Corporation, Tokyo 106-8620 (JP)
(72) Inventor: Nakamaru, Fumio c/o Fujifilm Corp., Miyagi 981-3496 (JP)
(74) Representative: Stevens, Jason Paul

(57) **Abstract**

A stereoscopic image display apparatus can display 2D and 3D images. If an image loaded into the apparatus is a 3D image, the image is first displayed in 2D. If a user enters instructions to end displaying the image in 2D, switching from 2D display to 3D display is immediately performed. Further, switching from 2D display to 3D display is also performed if a predetermined period of time has elapsed during 2D display, but switching from 2D display to 3D display is immediately performed if instructions to end 2D display are entered before the predetermined period of time elapses.

Because an image is firstly displayed in 2D display mode and then the mode is switched from 2D display to 3D display if a user instructs accordingly, it becomes possible to simultaneously achieve a reduction in the fatigue in an observer's eyes and an increase in the speed of switching to 3D display.

## Description

The present invention relates to an apparatus which performs stereoscopic display on the basis of a plurality of viewpoint images with a parallax therebetween.

There is available a technique for displaying a 3D (three dimensional) image in two-dimensional mode (2D mode) and then switching to display in three-dimensional mode (3D mode) in order to reduce eye fatigue when the 3D image is to be displayed. For example, according to Japanese Patent Application Laid-Open No. 11-164328, a parallax calculation device calculates a parallax between left and right images. A parallax determination device monitors a change in the parallax and, when the parallax changes significantly or when switching from a two-dimensional image to a three-dimensional image occurs, controls a parallax to be given to an image control device. This suppresses a rapid change and realizes a natural image change.

After a user displays taken images in 2D and finds a target image among the images, the user may wish to immediately switch from 2D display mode to 3D display mode. At least the preferred embodiments of the present invention aim to make it possible to immediately switch from 2D display mode to 3D display mode.

According to a first aspect of the present invention, there is provided a stereoscopic image display apparatus, comprising an image input section which inputs a plurality of viewpoint images to a predetermined storage medium; and a display control section which can display a stereoscopic image on a predetermined display device on the basis of the plurality of viewpoint images inputted to the predetermined storage medium, wherein the display control section displays a planar image on the predetermined display device on the basis of a desired reference viewpoint image among the plurality of viewpoint images until an instruction to end planar image display is received, and displays the stereoscopic image on the predetermined display device when the instruction to end planar image display is received.

Preferably, the display control section displays the stereoscopic image on the display device when a predetermined first waiting period of time has elapsed without reception of the instruction to end planar image display.

Preferably, the display control section repeats incrementing a parallax between the reference viewpoint image and a non-reference viewpoint image which is a viewpoint image other than the reference viewpoint image among the plurality of viewpoint images by a predetermined value, and displaying the stereoscopic image on the display device until an instruction to end shifted display is received.

Preferably, the display control section repeats incrementing the parallax between the reference viewpoint image and the non-reference viewpoint image by the predetermined value and displaying the stereoscopic image on the display device until the parallax between the reference viewpoint image and the non-reference viewpoint image reaches a predetermined target parallax or until the instruction to end shifted display is received before the parallax between the reference viewpoint image and the non-reference viewpoint image reaches the predetermined target parallax.

Preferably, the image input section erases from the storage medium the viewpoint images having been stored in the storage medium, and inputs a plurality of new viewpoint images to the storage medium when a predetermined second waiting period of time has elapsed without reception of an instruction to end stereoscopic image display during the display of the stereoscopic image.

According to a second aspect of the present invention, there is provided a stereoscopic image display method, the method causing a stereoscopic image display apparatus to perform the steps of: inputting a plurality of viewpoint images to a predetermined storage medium; and displaying a planar image on a predetermined display device on the basis of a desired reference viewpoint image among the plurality of viewpoint images until an instruction to end planar image display is received and displaying a stereoscopic image on the predetermined display device on the basis of the plurality of viewpoint images when the instruction to end planar image display is received.

A recording medium on which a program for causing a stereoscopic image display apparatus, a computer equipped with a display device or an image pickup apparatus with a display unit, to perform the stereoscopic image display method is also included in the scope of the present invention. The invention also extends to an image pickup apparatus comprising the stereoscopic image display apparatus described above and an image pickup section which inputs a plurality of viewpoint images obtained by photoelectrically converting, by an image pickup element, subject images formed through a plurality of optical systems to the image input section of the stereoscopic image display apparatus.

According to the presently disclosed subject matter, an image is first displayed in 2D display mode. Upon an instruction for 3D display, the display mode of the image is switched to 3D display mode. Therefore, the presently disclosed subject matter can simultaneously achieve a reduction in the fatigue in an observer's eyes and an increase in the speed of switching to 3D display.

Preferred embodiments of the invention will now be described by way of example only and with reference to the accompanying drawings, in which:
Fig. 1 is a block diagram of a camera;
Fig. 2 is a view for explaining the concept of a parallax barrier type 3D monitor;
Figs. 3A to 3C are views showing examples of pieces of first and second image data;
Fig. 4 is a flow chart illustrating a stereoscopic image display process according to a first embodiment;
Figs. 5A and 5B are views showing an example of 3D display based on pieces of first and second image data;
Fig. 6 is a flow chart of a stereoscopic image display process according to a second embodiment;
Figs. 7A to 7C are graphs showing examples of the relation of a position displacement for progressive 3D display with time;
Figs. 8A to 8D are views showing a display example of progressive 3D display in chronological order;
Fig. 9 is a flow chart of a stereoscopic image display process according to a third embodiment; and
Fig. 10 is a diagram showing an example of image transition in slide show display.

A camera 2 according to a preferred embodiment of the presently disclosed subject matter will be described below with reference to the accompanying drawings.

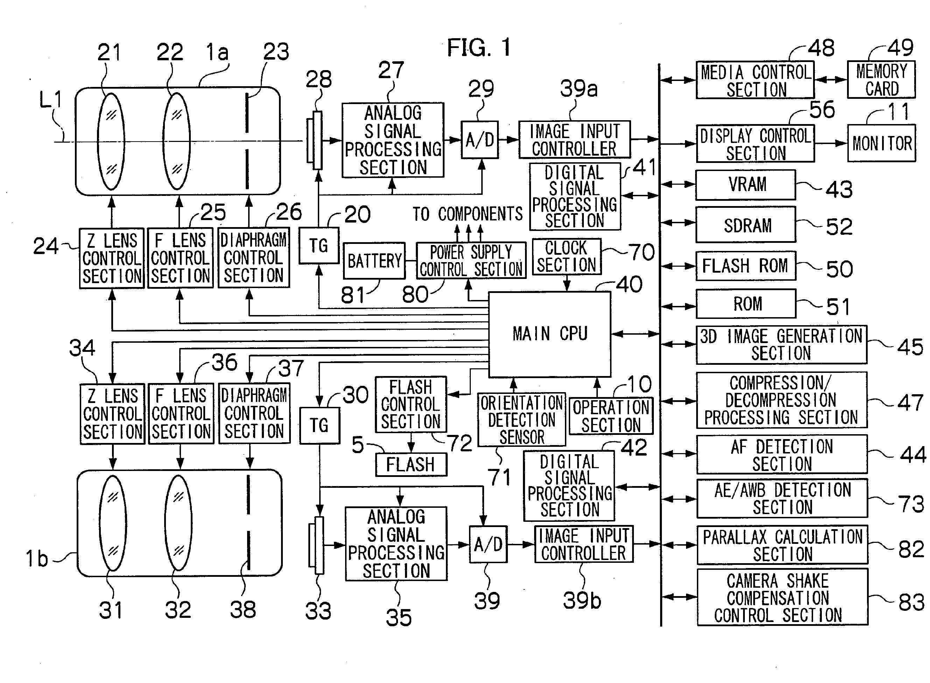

Fig. 1 shows an electrical configuration of the camera 2. A first imaging optical system 1a includes a first variable magnification lens 21, a first focus lens 22, and a first diaphragm 23, all of which are arranged along a lens optical axis L1. The first variable magnification lens 21 is driven by a first variable magnification lens control section 24 which is composed of a DC (direct current) motor and a driver. The first focus lens 22 is driven by a first focus lens control section 25 which includes a DC motor and a driver. The first diaphragm 23 is driven by a first diaphragm control section 26 which includes a DC motor and a driver. The operation of the control sections 24 to 26 is controlled by a main CPU 40 (hereinafter simply referred to as the CPU 40).

The first variable magnification lens control section 24 moves the first variable magnification lens 21 along the lens optical axis L1 from a home position as a start point to the TELE side/WIDE side (extended side/collapsed side) in response to operation of a zoom button (a ring-shaped operation member may be used instead of the button) of an operation section 10 to enter information on a TELE or WIDE zoom direction and changes a focal distance (imaging magnification). If the first variable magnification lens 21 is moved to the TELE side, the focal distance becomes longer, and an imaging range becomes narrower. On the other hand, if the first variable magnification lens 21 is moved to the WIDE side, the focal distance becomes shorter, and the imaging range becomes wider.

The first focus lens control section 25 moves the first focus lens 22 along the lens optical axis L1 and performs focusing. The position of the first focus lens 22 is automatically adjusted associated with movement of the first variable magnification lens 21 so as to prevent defocusing. Assume that stepwisely-increasing zoom factors (zoom steps Z1, Z2,..., Zn) can be entered through the operation section 10. A number "n" of steps (step count "n") can be arbitrary. The zoom step Z1 corresponds to the WIDE end whereas the zoom step Zn corresponds to the TELE end.

A target zoom direction set through the zoom button is inputted into the CPU 40. The CPU 40 sets a target zoom position according to the target zoom direction. The CPU 40 sets, as the target zoom position, a zoom step closest to the current position of the first variable magnification lens 21 among zoom steps existing on the TELE side with respect to the current position if the target zoom direction is the TELE direction; and sets, as the target zoom position, a zoom step closest to the current position of the first variable magnification lens 21 among zoom steps existing on the WIDE side with respect to the current position if the target zoom direction is the WIDE direction. The CPU 40 converts the target zoom position into the number of pulses (pulse count) needed for the first variable magnification lens 21 to reach a target stop position and causes the first variable magnification lens control section 24 to drive the first variable magnification lens 21 in accordance with the number of pulses. Note that a pulse count of 0 corresponds to the home position.

A first image sensor 28 receives a subject light (light reflected from the subject) formed by the first variable magnification lens 21 and the first focus lens 22, and stores photocharge corresponding to the amount of received light in light-receiving elements. Photocharge storage and transfer operation of the first image sensor 28 is controlled by a timing signal (clock pulse) periodically outputted from a timing generator (TG) 20. In shooting mode, the first image sensor 28 acquires image signals for one frame at predetermined intervals and sequentially outputs the image signals to a first analogue signal processing section 27. Note that a CCD (Charge Coupled Device) or MOS (Metal Oxide Semiconductor) solid-state image pickup apparatus can be used as the first image sensor 28.

The first analogue signal processing section 27 receives picked-up image signals for one frame inputted from the first image sensor 28, amplifies pieces of R, G, and B image data accurately corresponding to the amounts of charge stored in the light-receiving elements, and inputs the pieces of R, G, and B image data to a first A/D converter 29. The first A/D converter 29 converts the inputted pieces of image data from analogue format into digital format. Picked-up image signals from the first image sensor 28 are converted into a piece of first image data (image data for right eye) through the first analogue signal processing section 27 and the first A/D converter 29.

A second imaging optical system 1 b has the same configuration as the first imaging optical system 1a, and includes a second variable magnification lens 31 which is driven by a second variable magnification lens control section 34, a second focus lens 32 which is driven by a second focus lens control section 36, and a second diaphragm 38 which is driven by a second diaphragm control section 37. The operation of the control sections 34, 36, and 37 is controlled by the CPU 40.

Note that the material for each member of the first imaging optical system 1 a is also used as the material for the corresponding member of the second imaging optical system 1b. Basically, the first imaging optical system 1 a and the second imaging optical system 1 b are synchronized with each other and perform image pickup operation in conjunction with each other. The imaging optical systems may be separately operated for the purposes of increasing control speed and the like.

A second analogue signal processing section 35 and a second A/D (analogue-digital) converter 39 have the same configurations as the first analogue signal processing section 27 and the first A/D converter 29 described above, respectively. Picked-up image signals from a second image sensor 33 are converted into a piece of second image data (left eye image data) through the second analogue signal processing section 35 and the second A/D converter 39.

The pieces of first and second image data outputted from the first and second A/D converters 29 and 39 are respectively inputted into digital signal processing sections 41 and 42 through image input controllers 39a and 39b. The digital signal processing sections 41 and 42 perform various types of image processing such as gradation conversion, white balance correction, and γ correction processing on the pieces of first and second image data, respectively. A piece of first image data which is processed by the digital signal processing section 41 and is outputted at each predetermined cycle is inputted to a VRAM (Video Random Access Memory) 43. A piece of second image data which is processed by the digital signal processing section 42 and is outputted at each predetermined cycle is inputted to the VRAM 43.

The VRAM 43 is a working memory for temporarily storing pieces of first and second image data. If pieces of first and second image data for the next cycle are inputted to the VRAM 43 when pieces of first and second image data are already stored in the VRAM 43, the already stored pieces of first and second image data are overwritten with the newly inputted pieces of first and second image data. Pieces of first and second image data which are repeatedly overwritten and updated at each predetermined cycle in the VRAM 43 are referred to as a through image.

A 3D image generation section 45 combines pieces of first and second image data stored in the VRAM 43 into a piece of stereoscopic image data for stereoscopic display by a monitor 11. A display control section 56 causes the monitor 11 to display the piece of stereoscopic image data obtained through the combination by the 3D image generation section 45 as the through image when the monitor 11 is used as an electronic viewfinder in shooting mode.

Recording of a taken image will be described below. Images captured by the first imaging optical system 1 a and the second imaging optical system 1 b when a shutter button 6 is pressed are processed by the analogue signal processing sections 27 and 35, respectively. The processed images are converted into digital signal format by the A/D converters 29 and 39 and are respectively inputted to the digital signal processing sections 41 and 42 through the image input controllers 39a and 39b. The digital signal processing sections 41 and 42 perform various types of image processing such as gradation conversion, white balance correction, and γ correction processing on the pieces of first and second image data, respectively. The pieces of first and second image data processed by and outputted from the digital signal processing sections 41 and 42 are recorded in an SDRAM (Synchronous Dynamic Random Access Memory) 52. A compression/ decompression processing section 47 compresses the stored pieces of first and second image data in a compression format such as the JPEG (Joint Photographic Experts Group) format. The SDRAM 52 is used as a temporary storage area necessary for the compression. A media control section 48 records an image file in which the pieces of image data compressed by the compression/decompression processing section 47 are stored in a memory card 49. Note that the CPU 40 may be configured to control components of the first imaging optical system 1a, the second imaging optical system 1b, and the like to obtain pieces of first and second image data only if 3D image shooting mode is selected through the operation section 10.

When the pieces of first and second image data thus recorded on the memory card 49 are to be reproduced and displayed on the monitor 11, the pieces of image data recorded on the memory card 49 are read out by the media control section 48. The pieces of image data decompressed by the compression/ decompression processing section 47 are converted into a piece of stereoscopic image data by the 3D image generation section 45. After that, the piece of stereoscopic image data is reproduced and displayed on the monitor 11 through the display control section 56.

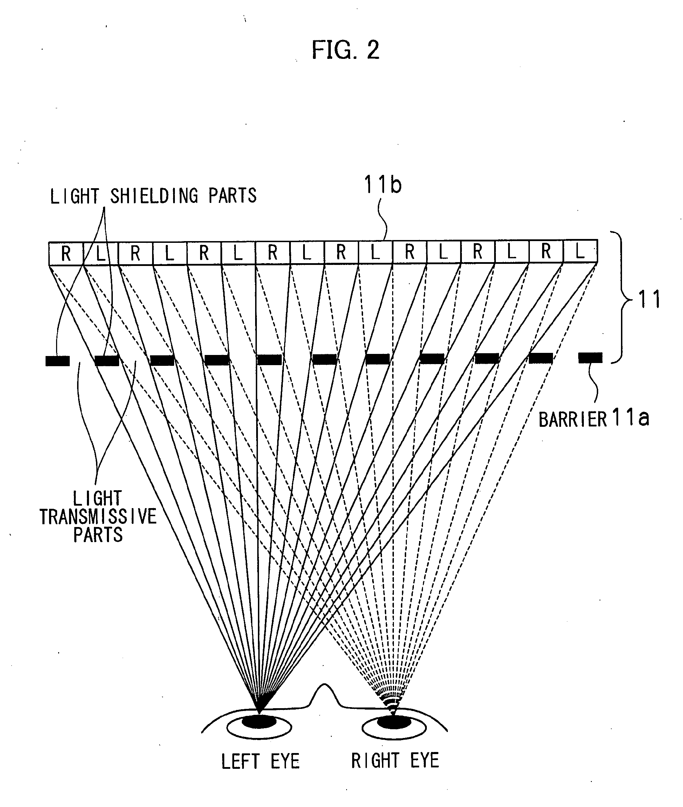

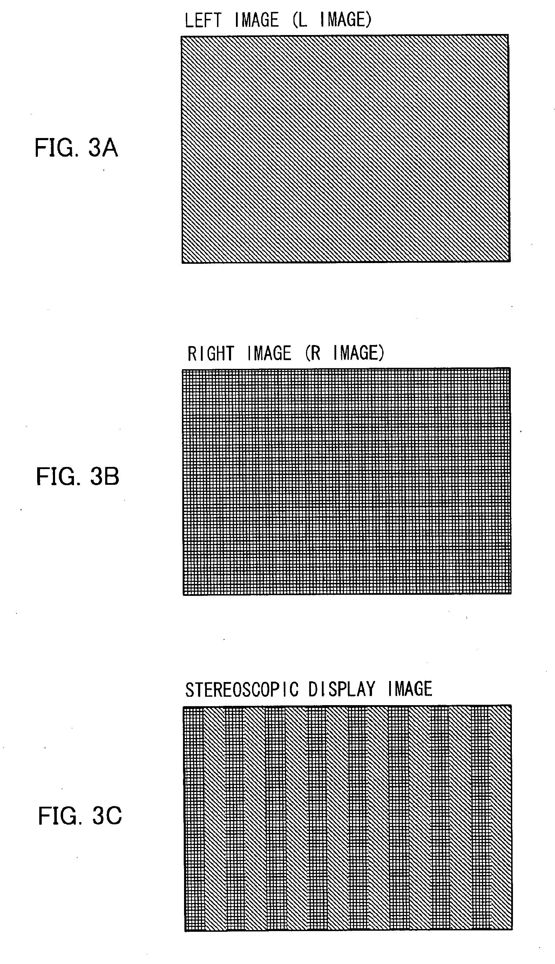

As shown in Fig. 2, the monitor 11 has a parallax barrier display layer on the surface. The monitor 11 generates a parallax barrier 11 a with a pattern in which light transmissive parts and light shielding parts are alternately arranged at a predetermined pitch, at the parallax barrier display layer. The monitor 11 also displays strip-shaped image fragments representing a left image (Fig. 3A) and a right image (Fig. 3B) which are alternately arranged on an image display surface 11 b under the parallax barrier display layer. This configuration can provide an observer with a stereoscopic view (Fig. 3C). The monitor 11 is not limited to one of the parallax barrier type described above. One of any other type may be employed as long as it can realize the same function.

The CPU 40 controls the overall operation of the camera 2 in a centralized manner. A flash control section 72 which controls light emission of a flash 5 and the operation section 10 are connected to the CPU 40. A flash ROM 50 is also connected to the CPU 40. The flash ROM 50 is a non-volatile memory into which data can be electrically rewritten and can store any data as long as it has free space.

A ROM 51 stores a control program for the CPU 40 to perform various types of processing. A clock section 70 counts the current time and outputs it to the main CPU 40. An orientation detection sensor 71 detects the imaging orientation, i.e., whether the camera 2 is oriented horizontally or vertically at a timing when the CPU 40 instructs, for example, when the shutter button is halfway pressed, and outputs a result of the detection to the CPU 40. A power supply control section 80 performs control to turn on or off the power supplied from a battery 81 to blocks of the camera 2 when it detects a power-on signal or a power-off signal issued from the CPU 40 in response to the operation of turning on or off a power switch included in the operation section 10. A camera shake compensation control section 83 is a device which senses image blurring (camera shake) at the time of image pickup and electronically or mechanically compensates for the image blurring, and any one known in the art may be adopted as the camera shake compensation control section 83.

An AF detection section 44 calculates a first AF evaluation value and a second AF evaluation value from a piece of first image data and a piece of second image data, respectively, stored in the VRAM 43. Each of the first AF evaluation value and the second AF evaluation value is calculated by adding up highfrequency components of luminance values for a region (e.g., a central region) designated by the CPU 40 in the corresponding piece of image data and represents the sharpness of the image. The first and second AF evaluation values each increase as the corresponding region approaches a focal point and reach its maximum when the region is in focus.

An AE/AWB detection section 73 detects subject brightness (measures the brightness of a subject) on the basis of each of the piece of first image data and the piece of second image data stored in the VRAM 43 and sets the subject brightness detected from the piece of first image data and that detected from the piece of second image data as a first photometric value and a second photometric value, respectively. The AE/AWB detection section 73 also detects a first WB value and a second WB value (white balances) on the basis of the piece of first image data and the piece of second image data stored in the VRAM 43. An exposure value may be calculated by an arbitrary method, and any of spot metering, centre-weighted averaging metering, and averaging metering may be employed. The CPU 40 is notified of the obtained first and second photometric values, the first and second WB values, and the first and second AF evaluation values and uses the values for AE control, AWB control, and AF control of image signals obtained from the first imaging optical system 1a and the second imaging optical system 1b.

The CPU 40 loads a program chart defining a correspondence among a photometric value, an aperture value, a sensitivity, and a shutter speed from the ROM 51 into the SDRAM 52 and refers to the program chart. The CPU 40 sets aperture values and sensitivities corresponding to the first photometric value and the second photometric value detected by the AE/AWB detection section 73 in the diaphragm control sections 26 and 37 and the image sensors 28 and 33, respectively, and performs exposure control.

A parallax calculation section 82 detects a parallax between a piece of first image data and a piece of second image data. More specifically, the parallax calculation section 82 extracts a plurality of (n count) features (xi, yi) (where i indicates an integer satisfying: 1 < i ≤ n) inside an AF evaluation area at a predetermined position in a predetermined shape of a predetermined size from an image, in this example, the piece of second image data obtained from the second imaging optical system 1b, obtained from a reference image pickup section. For example, the AF evaluation area is arranged at the centre of the piece of image data. The presently disclosed subject matter, however, is not limited to this. For example, the CPU 40 may detect a face or a specific type of object from an image obtained from the reference image pickup section and set a rectangle surrounding the detected object as the AF evaluation area. The shape of the AF evaluation area is not limited to a rectangular shape, and any other shape such as a circular shape or elliptical shape may be adopted. The size of the AF evaluation area may also be arbitrarily set.

A feature refers to a point (pixel) with high signal gradients in a plurality of directions. Features can be extracted using, e.g., the Harris method or Shi-Tomasi method. The parallax calculation section 82 then extracts, from the piece of first image data, corresponding points which are points in the piece of first image data corresponding to the features extracted from the piece of second image data. The corresponding points may be extracted by an arbitrary method. Common examples of the method include the process of performing template matching using, as a template, image information within a window centred on a feature and the Lucas-Kanade method. The embodiment of the present application, however, is not particularly limited to these. A horizontal component of a line segment connecting a feature and a corresponding point is a parallax. If there are a plurality of pairs of a feature and a corresponding point, a parallax corresponding to each pair is detected. In the case of a compound-eye image pickup apparatus in which image pickup systems are arranged on both right and left sides, a parallax di for a pair of a feature (xi, yi) and a corresponding point (Xi, Yi) is calculated by: di = Xi - xi. A parallax processing section 100 includes an arithmetic unit such as a one-chip microcomputer. The CPU 40 may also function as the parallax processing section 100.

The parallax calculation section 82 calculates and determines a final parallax d on the basis of a plurality of parallaxes di. The same parallaxes should be detected from subjects at the same distance. If subjects at different distances are present within an image region from which features are to be extracted, not all disparity vectors have the same lengths. Accordingly, the parallax calculation section 82 determines the final parallax d according to one of Rules 1) to 4) below. Any of the rules may be adopted.

Rule 1) Determine an average value of a plurality of parallaxes di as the final parallax d.

Rule 2) Determine a mode value of a plurality of parallaxes di as the final parallax d.

Rule 3) Determine the largest parallax di as the final parallax d.

Rule 4) Determine a parallax di for a subject closest to the camera 2 as the final parallax d.

The 3D image generation section 45 determines a target parallax for making a parallax between a piece of first image data and a piece of second image data most suitable for viewing on the basis of the determined final parallax d, and determines clipping ranges which cause a parallax between the piece of first image data and the piece of second image data displayed on the monitor 11 to coincide with the determined target parallax. For example, if the final parallax d is -24 with reference to a left image (the piece of second image data), it means that a right image (the piece of first image data) is displaced by 24 pixels to the left with respect to the left image. For example, if the target parallax is set to a value which reduces a parallax for a subject-in-focus to 0, the 3D image generation section 45 determines the clipping range for the left image and that for the right image according to the target parallax in a manner that the displacement of 24 pixels is eliminated. The 3D image generation section 45 clips images from the piece of first image data and the piece of second image data according to the determined clipping ranges and outputs the clipped images to the monitor 11.

Note that, if 2D image shooting mode is selected through the operation section 10, the CPU 40 may control components of the reference image pickup section (only the second imaging optical system 1b in this example) and the like to acquire a piece of image data from the second imaging optical system 1 b only, and record the acquired image as a 2D image in the memory card 49.

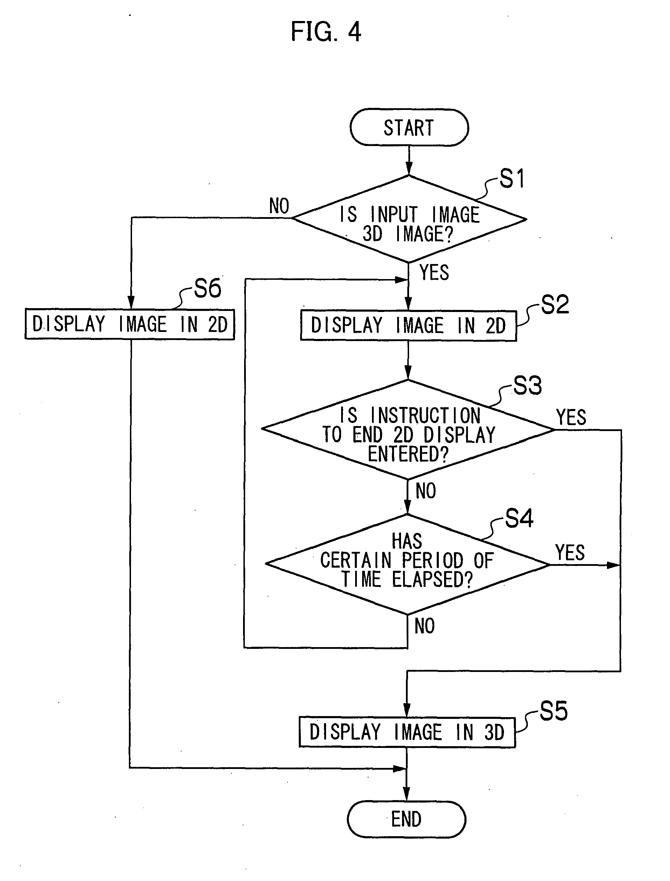

Fig. 4 shows a flow chart explaining a stereoscopic image display process according to the first embodiment. Execution of the process is controlled by the CPU 40. A program for causing the CPU 40 to perform the process is stored in the ROM 51. Note that a personal computer or the like with a hardware configuration equivalent to the CPU 40 can control implementation of the following process by one or a plurality of image pickup apparatuses, and therefore, the CPU 40 need not necessarily be incorporated in the camera 2.

In S1, the CPU 40 selects an image file from the memory card 49 in response to an image selection operation through the operation section 10 and loads image data obtained by decompressing the selected image file into the VRAM 43. The CPU 40 determines on the basis of pieces of associated data such as header information and meta-information of the image file whether the image loaded into the VRAM 43 is a 2D image or a 3D image. If the CPU 40 determines that the image is a 3D image, the flow advances to S2. On the other hand, if the CPU 40 determines that the image is a 2D image, the flow advances to S6.

In S2, the display control section 56 outputs, as a 2D image, the image loaded into the VRAM 43 to the monitor 11. That is, the image to be displayed on an image display surface of the monitor 11 is not strip-shaped image fragments representing a left image and a right image which are alternately arranged, but only a left image. Of course, the right image may instead be outputted as a 2D image to the monitor 11.

In S3, the CPU 40 determines whether instructions to end outputting the 2D image are entered (e.g., an OK key is pressed) through the operation section 10. If the instructions are entered, the flow advances to S5. Otherwise, the flow advances to S4.

In S4, the CPU 40 determines whether a predetermined period of time (e.g., 1 minute) has elapsed without receipt of the instructions since the start of the output of the 2D image. If the predetermined period of time has elapsed, the flow advances to S5. Otherwise, the flow returns to S2.

In S5, the display control section 56 outputs the 3D image on the basis of the pieces of first and second image data loaded into the VRAM 43.

In S6, the display control section 56 outputs the 2D image on the basis of the pieces of image data loaded into the VRAM 43.

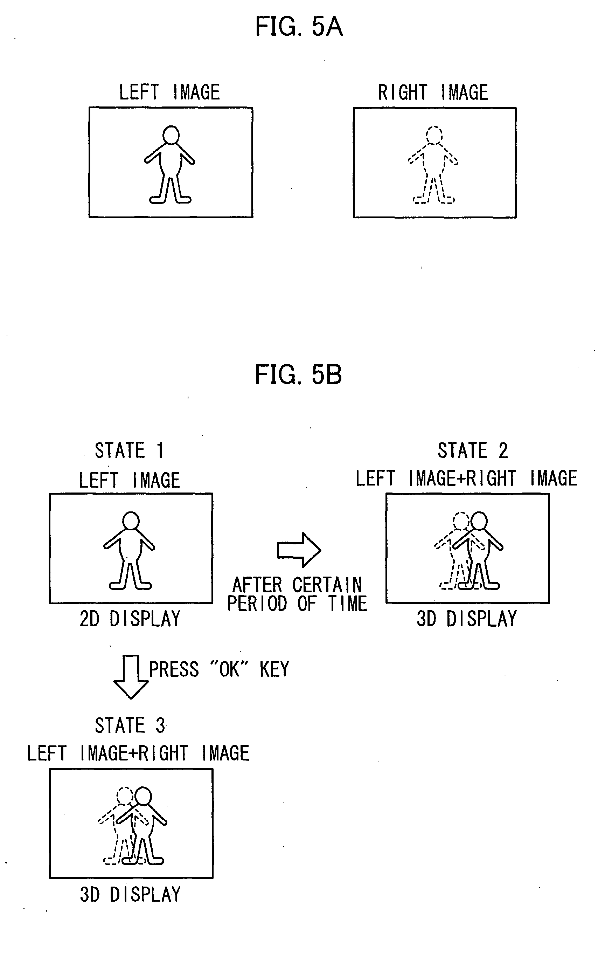

Fig. 5A shows examples of pieces of first and second image data of an image file selected through the operation section 10; and Fig. 5B shows examples of 2D display based on the piece of second image data, and 3D display based on the pieces of first and second image data.

As shown in Fig. 5A, the pieces of first and second image data of the image file selected through the operation section 10 refer to a right image and a left image, respectively. Assume that the right and left images are loaded into the VRAM 43.

In this case, as shown in Fig. 5B, the piece of second image data obtained from the reference image pickup section is first displayed as a 2D image (state 1 in Fig. 5B). If the OK key is pressed or if the predetermined period of time has elapsed during 2D display, 3D display is performed (states 2 and 3 in Fig. 5B).

With the process described above, if a loaded image is a 3D image, the image is first displayed in 2D. If a user enters instructions to end displaying the image in 2D, switching from 2D display to 3D display is immediately performed. Also, in a case where the predetermined period of time has elapsed during 2D display, switching from 2D display to 3D display is performed. If instructions to end 2D display are entered before the predetermined period of time elapses, switching from 2D display to 3D display is immediately performed. As described above, the process of first displaying an image in 2D and switching to 3D display if instructed to do so makes it possible to simultaneously achieve a reduction in the fatigue in an observer's eyes and an increase in the speed of switching to 3D display.

### <Second Embodiment>

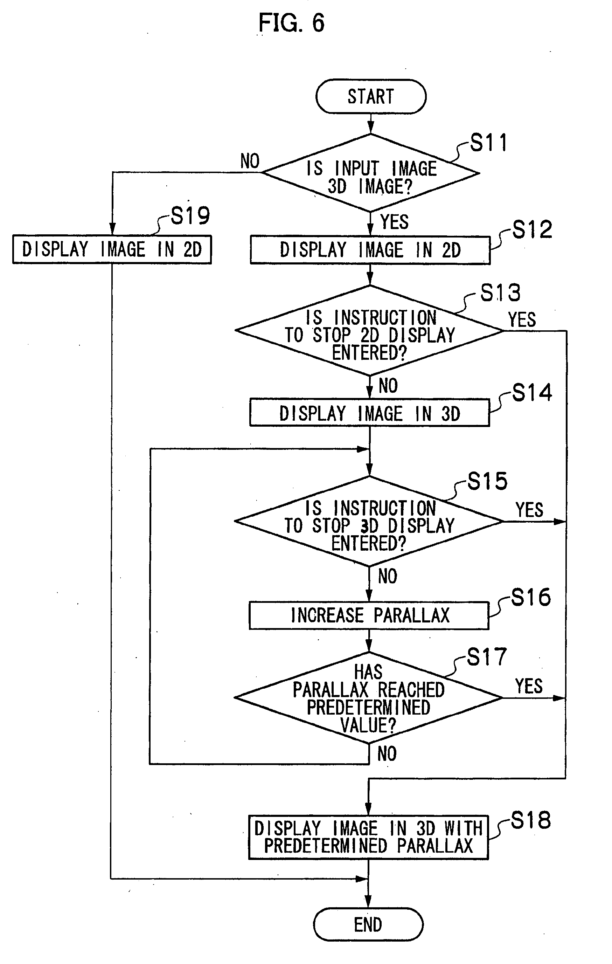

Fig. 6 is a flow chart explaining a stereoscopic image display process according to a second embodiment. Implementation of the process is controlled by a CPU 40. A program for causing the CPU 40 to perform the process is stored in a ROM 51. Note that a personal computer or the like with a hardware configuration equivalent to the CPU 40 can control execution of the following process by one or a plurality of image pickup apparatuses, therefore, the CPU 40 need not necessarily be incorporated in a camera 2.

S11 and S12 are the same as S1 and S2.

In S13, the CPU 40 determines whether instructions to stop 2D display are entered through an operation section 10. If the instructions are entered, the flow advances to S18. Otherwise, the flow advances to S14.

In S14, the CPU 40 performs progressive 3D display of pieces of first and second image data in a VRAM 43. The progressive 3D display refers to performing 3D display while gradually increasing, from 0, a parallax between the pieces of first and second image data on a monitor 11 until the parallax between the pieces of first and second image data, i.e., a displacement in horizontal display position reaches a target parallax. An amount of displacement between the pieces of first and second image data is 0 in initial display position, and the displacement is increased in S16 (to be described later).

In S15, the CPU 40 determines whether instructions to stop progressive 3D display are entered. If the instructions are entered, the flow advances to S18. Otherwise, the flow advances to S16.

In S16, the CPU 40 increments the position displacement between the pieces of first and second image data on the monitor 11 by a predetermined value (e.g., 2 pixels), shifts left and right images in opposite directions on the monitor 11 by the incremented position displacement, and performs 3D display. Since the position displacement between the pieces of first and second image data may not be uniform across the entire screen (e.g., the position displacement may be larger at the centre of the screen and be smaller on the periphery), amount of displacement can be changed according to location.

In S17, the CPU 40 determines whether the parallax has reached the target parallax as a result of S16. If the parallax has reached the target parallax, the flow advances to S18. Otherwise, the flow returns to S15.

In S18, the CPU 40 displays the 3D image with the target parallax. Switching from 2D display in S12 to 3D display in S18 is performed by replacing the piece of second image data used for a right eye image with the piece of first image data. At the time of the replacement, the fade effect for gradually replacing display regions for the piece of second image data with display regions for the piece of first image data may be used.

S19 is the same as S6.

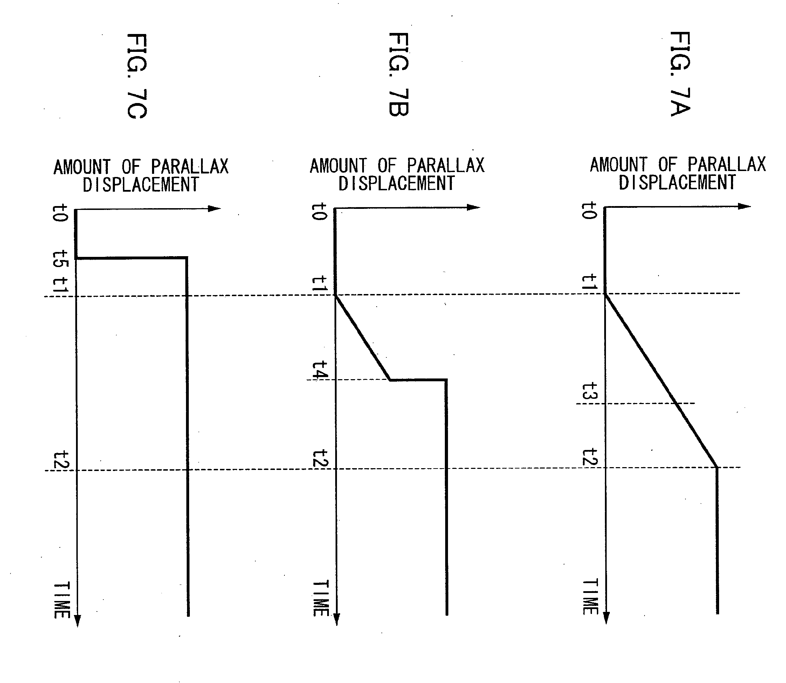

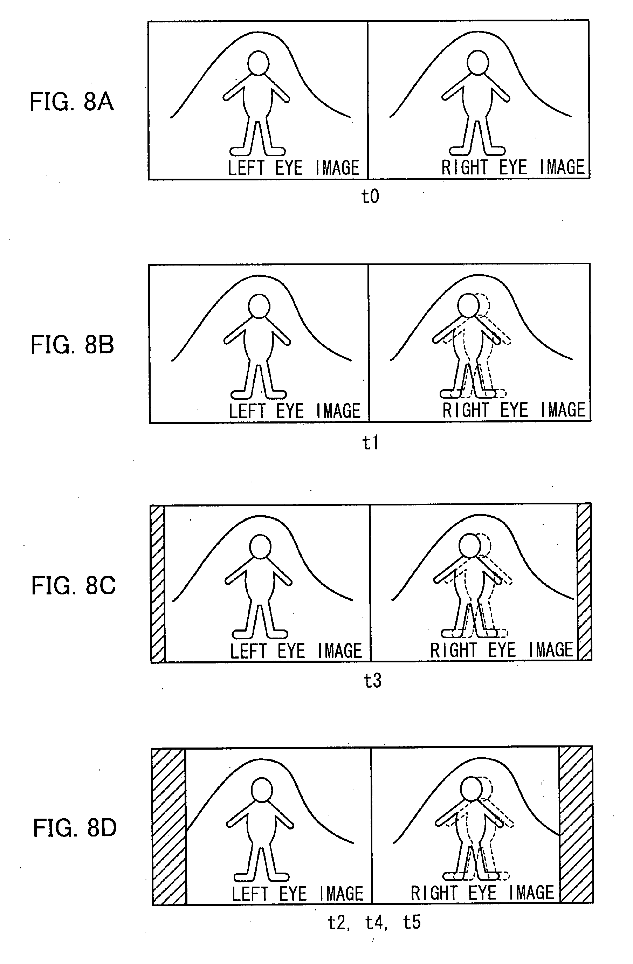

Note that the amount of position displacement to be incremented may be increased with time. Figs. 7A to 7C show examples of the relation between the amounts of position displacement in progressive 3D display with respect to time. Although Fig. 7A shows an example in which the amount of displacement changes linearly between times t1 and t2, it may change according to a non-linear function such as a quadratic function or an exponential function. Figs. 8A to 8D show a display example of progressive 3D display in chronological order.

First, in S12 (at time t0), 2D display starts. If stop instructions are not entered in S13 (at time t0) and S15 (at time t3), the amount of displacement starting at 0 is repeatedly incremented by the predetermined value from time t1 to time t3 (Fig. 7A). Note that although Fig. 7A shows the change of the displacement amount with a straight line for ease of illustration because the amount of increment is small (minute), the amount of displacement actually increases in a stepped manner (increases repeatedly by the same amount) over time.

If stop instruction is entered at the time of the second or subsequent execution of a loop from S15 to S17 ("Yes" in S15), the flow proceeds to S18. At time t4 when the stop instruction is entered, 3D display with the target parallax starts immediately (Fig. 7B).

If stop instruction is entered in S13 ("Yes" in S13), the flow does not enter the loop from S15 to S17. At time t5 when the stop instruction is entered, 3D display with the target parallax starts immediately (Fig. 7C).

Fig. 8A shows an example of the left and right images at time t0 with a displacement amount of 0 on the monitor 11; Fig. 8B, an example of the left and right images at time t1; Fig. 8C, an example of the left and right images at time t3; and Fig. 8D, an example of the left and right images at time t2, t4, or t5. In progressive 3D display at each of times t1 to t5, 3D display may be considered to be performed by replacing the left and right images in Figs. 3A and 3B with a corresponding one of the pairs of left and right images in Figs. 8A to 8D at each of times t1 to t5. That is, in progressive 3D display, strip-shaped image fragments of the left and right images shown in Figs. 8A to 8D are alternately arranged and displayed on one image display surface of the monitor 11.

With the process described above, the progressive 3D display in which the parallax changes gradually to reach the target parallax is performed. This allows a reduction in the fatigue in an observer's eyes. In addition, when the instruction to stop progressive 3D display is entered, switching to 3D display with the target parallax is immediately performed. It is thus possible to simultaneously achieve a reduction in eye fatigue and an increase in the speed of switching to 3D display.

### <Third Embodiment>

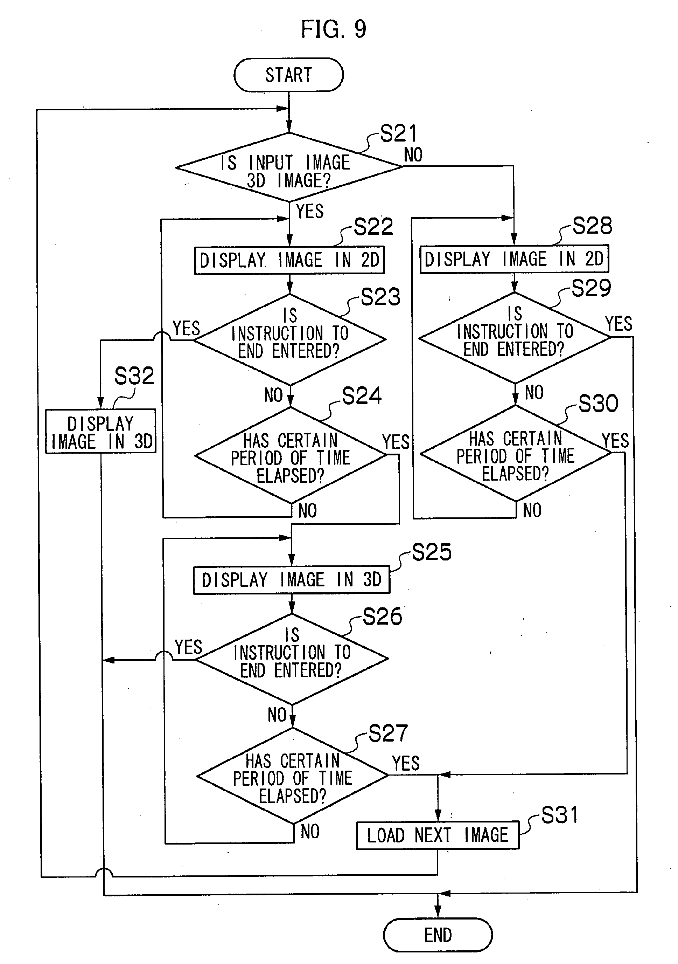

Fig. 9 is a flow chart illustrating a stereoscopic image display process according to a third embodiment. The process according to the third embodiment is initiated by an instruction to start slide show display. Implementation of the process is controlled by a CPU 40. A program for causing the CPU 40 to perform the process is stored in a ROM 51. Note that a personal computer or the like with a hardware configuration equivalent to the CPU 40 can control execution of the following process by one or a plurality of image pickup apparatuses, therefore, the CPU 40 need not necessarily be incorporated in a camera 2.

S21 to S25 are the same as S1 to S5. Note that the flow advances to S26 after the end of S25.

In S26, the CPU 40 determines whether a slide show end instructions is entered. If the instruction is entered, the CPU 40 ends the process. Otherwise, the flow advances to S27.

In S27, the CPU 40 performs the same determination as in S24. If a predetermined period of time has elapsed, the flow advances to S31. Otherwise, the flow returns to S25. Note that the predetermined period of time (waiting time for 3D end instruction) in S27 need not be equal to the predetermined period of time (waiting time for 2D end instruction) in S24.

S28 is the same as S6.

In S29, the CPU 40 performs the same determination as in S23. If the instruction is entered, the CPU 40 ends the process. Otherwise, the flow advances to S30.

In S30, the CPU 40 performs the same determination as in S24. If a predetermined period of time has elapsed, the flow advances to S31. Otherwise, the flow returns to S28.

In S31, the CPU 40 erases the image file loaded in S21 from a VRAM 43 and loads an image file next to the erased image file (e.g., in ascending/descending file name order or in the order of time stamp attached to image files) from a memory card 49 into the VRAM 43.

S32 is the same as S25.

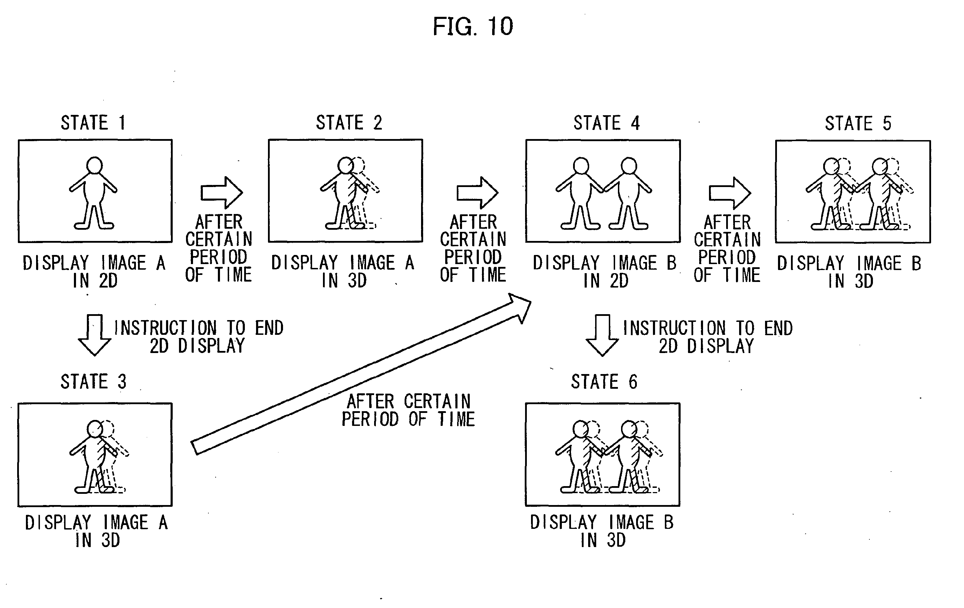

With the process described above, if a loaded image is a 3D image, the image is first displayed in 2D display mode (state 1 in Fig. 10, the image A is displayed in 2D display mode). If the instruction to end 2D display is entered or if the predetermined period of time has elapsed without reception of the instruction, switching from 2D display to 3D display is performed (states 2 and 3 in Fig. 10). If a user enters the slide show end instruction (e.g., presses an OK key) during 3D display, slide show display is immediately stopped. If the predetermined period of time has elapsed without reception of the slide show end instruction during 3D display, a next image is loaded, and 2D display of the image is started (state 4 in Fig. 10, the image B is displayed in 2D display mode). After that, if 2D display end instruction is entered or if the predetermined period of time has elapsed without reception of the instruction, switching from the 2D display to 3D display is similarly performed (states 5 and 6 in Fig. 10). As described above, in a slide show using a 3D image, 2D display is first performed. This prevents frequent switching between 3D display images and reduces the fatigue in an observer's eyes. Simultaneously, an increase in the speed of switching from displaying a desired image in 2D to displaying the image in 3D can be achieved.

## Claims

1. A stereoscopic image display apparatus, comprising:
an image input section (39a, 39b, 40) which inputs a plurality of viewpoint images to a predetermined storage medium (43); and
a display control section (56) which can display a stereoscopic image on a predetermined display device (11) on the basis of the plurality of viewpoint images inputted to the predetermined storage medium (43),
wherein the display control section (56) displays a planar image on the predetermined display device (11) on the basis of a desired reference viewpoint image among the plurality of viewpoint images until an instruction to end planar image display is received, and displays the stereoscopic image on the predetermined display device (11) when the instruction to end planar image display is received.

2. The stereoscopic image display apparatus according to claim 1, wherein the display control section (56) displays the stereoscopic image on the display device (11) when a predetermined first waiting period of time has elapsed without reception of the instruction to end planar image display.

3. The stereoscopic image display apparatus according to claim 1, wherein the display control section (56) repeats incrementing a parallax between the reference viewpoint image and a non-reference viewpoint image which is a viewpoint image other than the reference viewpoint image among the plurality of viewpoint images by a predetermined value, and displaying the stereoscopic image on the display device (11) until an instruction to end shifted display is received.

4. The stereoscopic image display apparatus according to claim 3, wherein the display control section (56) repeats incrementing the parallax between the reference viewpoint image and the non-reference viewpoint image by the predetermined value and displaying the stereoscopic image on the display device (11) until the parallax between the reference viewpoint image and the non-reference viewpoint image reaches a predetermined target parallax or until the instruction to end shifted display is received before the parallax between the reference viewpoint image and the non-reference viewpoint image reaches the predetermined target parallax.

5. The stereoscopic image display apparatus according to claim 1, wherein the image input section (39a, 39b, 40) erases from the storage medium (43) the viewpoint images having been stored in the storage medium (43), and inputs a plurality of new viewpoint images to the storage medium (43) when a predetermined second waiting period of time has elapsed without reception of an instruction to end stereoscopic image display during the display of the stereoscopic image.

6. A stereoscopic image display method, the method causing a stereoscopic image display apparatus to perform the steps of:
inputting a plurality of viewpoint images to a predetermined storage medium (43); and
displaying a planar image on a predetermined display device (11) on the basis of a desired reference viewpoint image among the plurality of viewpoint images until an instruction to end planar image display is received and displaying a stereoscopic image on the predetermined display device (11) on the basis of the plurality of viewpoint images when the instruction to end planar image display is received.

7. A recording medium on which a program is recorded, the program comprising computer-executable instructions of:
inputting a plurality of viewpoint images to a predetermined storage medium (43); and
displaying a planar image on a predetermined display device (11) on the basis of a desired reference viewpoint image among the plurality of viewpoint images until an instruction to end planar image display is received and displaying a stereoscopic image on the predetermined display device (11) on the basis of the plurality of viewpoint images when the instruction to end planar image display is received.

8. An image pickup apparatus comprising:
a stereoscopic image display apparatus according to any one of claims 1 to 5; and
an image pickup section which inputs a plurality of viewpoint images obtained by photoelectrically converting, by an image pickup element, subject images formed through a plurality of optical systems into the image input section (39a, 39b, 40) of the stereoscopic image display apparatus.

9. A stereoscopic image display method, the method causing an image pickup apparatus to perform the steps of:
inputting a plurality of viewpoint images to a predetermined storage medium (43); and
displaying a planar image on a predetermined display device (11) on the basis of a desired reference viewpoint image among the plurality of viewpoint images until an instruction to end planar image display is received and displaying a stereoscopic image on the predetermined display device (11) on the basis of the plurality of viewpoint images when the instruction to end planar image display is received.

10. A recording medium on which a program is recorded, the program causing a processor of an image pick-up apparatus to realize functions of:
inputting a plurality of viewpoint images to a predetermined storage medium (43); and
displaying a planar image on a predetermined display device (11) on the basis of a desired reference viewpoint image among the plurality of viewpoint images until an instruction to end planar image display is received and displaying a stereoscopic image on the predetermined display device (11) on the basis of the plurality of viewpoint images when the instruction to end planar image display is received.
